# EUROPÄISCHE PATENTSCHRIFT

(11) **EP 1 658 123 B1**
(45) Veröffentlichungstag und Bekanntmachung des Hinweises auf die Patenterteilung: **14.10.2009**
(21) Anmeldenummer: 04764138.6
(22) Anmeldetag: 14.08.2004
(51) Int. Cl.: B01D 53/68, F23C 9/00, B01D 53/75

(54) **VERFAHREN UND VORRICHTUNG ZUR REDUZIERUNG VON POLYHALOGENIERTEN VERBINDUNGEN IN VERBRENNUNGSANLAGEN**
METHOD AND DEVICE FOR REDUCING POLYHALOGENATED COMPOUNDS IN INCINERATION PLANTS
PROCEDE ET DISPOSITIF POUR REDUIRE LES COMPOSES POLYHALOGENES DANS DES USINES D'INCINERATION

(30) Priorität: 23.08.2003 DE 10338752
(43) Veröffentlichungstag der Anmeldung: 24.05.2006
(73) Patentinhaber: Forschungszentrum Karlsruhe GmbH, 76133 Karlsruhe (DE)
(72) Erfinder: HUNSINGER, Hans, 76356 Weingarten (DE)
(86) Internationale Anmeldenummer: PCT/EP2004/009146
(87) Internationale Veröffentlichungsnummer: WO 2005/021136

(56) Entgegenhaltungen:
- EP-A- 0 435 848
- EP-A- 0 547 295
- EP-A- 1 271 053
- DE-A- 4 012 887
- DE-A- 4 447 583
- DE-A- 19 849 021
- K. RAGHUNATHAN, B.K. GULLETT: "Role of Sulfur in Reducing PCDD and PCDF Formation" ENVIRONMENTAL SCIENCE AND TECHNOLOGY, Bd. 30, Nr. 6, 15. März 1996 (1996-03-15), Seiten 1827-1834, XP002310557 in der Anmeldung erwähnt

## Beschreibung

Die Erfindung betrifft ein Verfahren sowie eine Vorrichtung zur Reduzierung von polyhalogenierten Verbindungen in Verbrennungsanlagen mit mindestens einem Brennraum gemäß des ersten und des vierten Patentanspruchs. Das Verfahren und die Vorrichtung eignen sich ferner gleichermaßen zur Minderung von Kesselkorrosion durch Reduzierung des Cl-Gehaltes in den beim Betrieb entstehenden Aschablagerungen.

Polyhalogenierte Verbindungen sind beispielsweise polychlorierte Dibenzo-p-dioxine und Dibenzofurane (PCDD/F), welche sich in Verbrennungsprozessen, unter anderem auch in der Müllverbrennung, bilden und mit dem Abgas abgeleitet werden.'Aufgrund ihrer Toxizität hat der Gesetzgeber in der Bundesrepublik Deutschland in der 17. Bundesimmissionsschutzverordnung (17.BImSchV) einen Grenzwert für die Emission dieser Verbindungen aus Müllverbrennungsanlagen von 0.1 ng TEQ/Nm³ (TEQ= Toxizitätsäquivalent) festgelegt. Dieser Grenzwert für PCDD/F im Verbrennungsabgas ist nach heutigem Kenntnisstand durch eine alleinige Optimierung der Feuerungsbedingungen nicht einhaltbar. Insofern ist es Stand der Technik, die Konzentration der PCDD/F im Verbrennungsabgas mit einer der Verbrennung nachgeschalteten zusätzlichen Rauchgasreinigung unter den vorgeschriebenen Grenzwert abzusenken. Folglich bestehen Verbrennungsanlagen im Wesentlichen aus einem Brennraum ggf. mit einem Kessel, mindestens einem nachgeschalteten Staubabscheider sowie mindestens einem Nasswäscher.

Aus [1] und [2] ist allgemein bekannt, dass sich der PCDD- und PCDF-Anteil in einem Abgas auch allein durch einen Schwefelüberschuss in einer Verbrennung erheblich reduzieren lässt. Dabei kommt es insbesondere auf das Verhältnis von Schwefeldioxid zu Salzsäure an, wobei sich bei steigendem Verhältnis von Schwefeldioxid zu Salzsäure eine erhebliche Reduzierung des PCDD- und PCDF-Anteils im Abgas einstellt.

Auch [4] offenbart ein Verfahren, bei dem Schwefel oder Schwefelverbindungen in den Brennraum eingebracht werden. Ferner wird eine Abscheidung von SO₂ und SO₃ nach der Verbrennung erfolgt in einem Feststoffreaktor mittels Ca(OH)₂ und NaHCO₃ beschrieben.

Ebenso offenbaren [5] und [6] Verfahren zur Behinderung organischer Schadstoffbildung in Verbrennungsprozessen durch Zudosierung von Schwefel oder Schwefelträger bzw. durch eine Erhöhung des S03 zu SO2-Verhältnisses.

In [3] wird zudem ein Verfahren zur Verminderung von Korrosion in Feuerungsanlagen offenbart, bei dem ein Teilgasstrom des Rauchgases nach Abspaltung eines Großteiles der Salzsäure in einer ersten sauer betriebenen Wäscherstufe über die Eindüsung von Sekundärgas wieder in den Brennraum zurückgeführt wird, d.h. rezykliert wird. Aufgrund des geringen Salzsäuregehaltes und der noch nicht erfolgten Schwefeldioxidminderung in einer zweiten Wäscherstufe stellt sich im Rauchgas ein Verhältnis von Schwefeldioxid zu Salzsäure größer 1 ein. Es erfolgt eine Reduzierung des Salzsäureanteils des Rohabgases im Brennraum allein durch eine Verdünnung mit dem rezyklierten Abgas.

Für eine deutliche Veränderung des S/C1-Verhältnisses sind jedoch sehr große Mengen an rezyklierten Abgas erforderlich, was zu einer erhebliche Erhöhung des Abgasvolumenstroms im Bereich des Kessels und des Entstaubers führt. Dies führt ohne weitere Maßnahmen zu reduzierten Verbrennungstemperaturen und damit zu Effizienzverlusten, welche sich allerdings durch ein zusätzliches Aufheizen der dem Brennraum zugeführten Gase kompensieren oder durch Einsatz von Chemikalien oder Hilfsstoffen mildern ließen.

Davon ausgehend ist es Aufgabe der Erfindung, eine Vorrichtung und ein Verfahren zur Reduzierung von polyhalogenierten Verbindungen in Verbrennungsanlagen mit mindestens einen Brennraum vorzuschlagen, bei denen sich die vorgenannten Nachteile oder Einschränkungen nicht oder in einem vernachlässigbaren Maße einstellen.

Die Aufgabe wird durch ein Verfahren mit den Merkmalen aus Anspruch 1 und eine Vorrichtung mit den Merkmalen aus Anspruch 4 gelöst. Die Unteransprüche geben vorteilhafte Ausführungsformen wieder.

Ein wesentlicher Grundgedanke der Erfindung basiert darauf, dass SO₂ aus dem Rauchgas in mindestens einem Wäscher selektiv abgeschieden wird und in den Brennraum als SO₂ oder Schwefelsäure rezykliert wird. Durch die selektive Abscheidung von SO₂ in einem Wäscher steht in vorteilhafter Weise hochkonzentriertes SO₂ oder Schwefelsäure und eben nicht eine verdünnte Abgasmischung mit niedrigen SO₂-Konzentrationen für die Rezyklierung zur Verfügung, was die vorgenannten Nachteile des Stands der Technik, welche sich durch eine zu starke Verdünnung ergeben, erheblich mindert.

Die Erfindung wird im Folgenden mit einem Ausführungsbeispiel anhand der folgenden Figur näher erläutert. Es zeigt

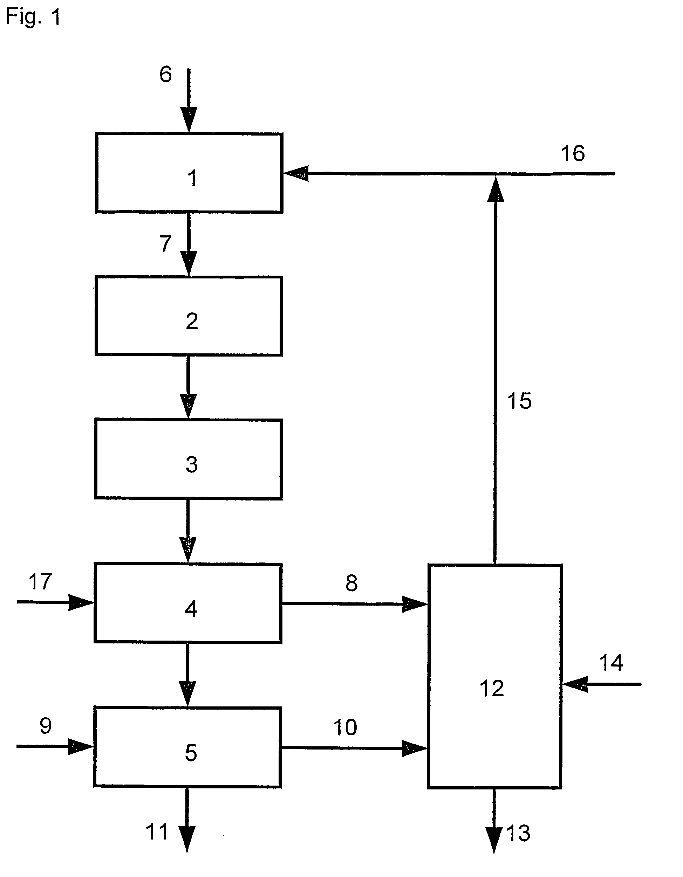

Fig. 1 die Prozessströme des Verfahrens in der schematisch dargestellten Vorrichtung.

Die Erfindung in Verbindung mit einer Verbrennungsanlage besteht, wie in Fig. 1 dargestellt, aus einem Brennraum 1 mit sauerstoffhaltiger Primär- und Sekundärgaszufuhr 6 bzw. 16, einem Kessel 2 oder eine andere Komponente zur Kühlung des Rohabgases 7, sowie nachgeschaltete Abreinigungsstufen für das Rohabgas. Diese Abreinigungsstufen umfassen einen Staubabscheider 3, beispielsweise einen Gewebefilter, einen ersten sauer betriebenen Wäscher 4 sowie einen zweiten neutral betriebenen Wäscher 5. Nach Durchlaufen der Abreinigungsstufen wird das abgereinigte Abgas 11 beispielsweise über einen Schornstein in die Umgebung abgeleitet. Ferner umfasst die Erfindung einen Reaktor 12 mit einer Zuleitung für ein Trägergas 14, eine erste und zweite Leitung 8 bzw. 10 als Verbindungsleitungen zu den beiden Wäschern 4 und 5 sowie zwei Ableitungen 13 und 15, wobei die Ableitung 15 mit der Leitung für die Sekundärzufuhr 16 eine Verbindung zum Brennraum bildet.

Im Rahmen der Prozessströme erfolgt zunächst im Brennraum 1 eine Verbrennung eines Brennstoffs unter Primärgaszufuhr 6 sowie eine Nachverbrennung von noch nicht vollständig verbrannter Anteile unter einer Sekundärgaszufuhr 16. Das dabei entstehende Rohabgas 7, das eine Temperatur im Bereich von 1000°C aufweist, wird an eine Kesselwand geleitet und gibt dort eine gewisse Wärmemenge durch Wärmeübertragung an den Kessel bzw. des im Kessel befindlichen Mediums ab, wobei sich das Rohabgas auf Temperaturen von 200 bis 300°C abkühlt. Das Rohabgas durchströmt anschließend die erste Abreinigungsstufe, den Staubabscheider 3, den das Abgas im Rahmen des Ausführungsbeispiels mit gleichem Temperaturniveau in Richtung des ersten Wäschers 4 verlässt.

Dioxine bilden sich im Abgasstrang bevorzugt in einem Temperaturniveau oberhalb 200°C, d.h. genau in dem zuvor genannten Temperaturniveau an Kesselwand 2 und Staubabscheider 3, lassen sich aber, wie zuvor beschrieben, durch eine Einleitung von Schwefeldioxid oder auch Schwefelsäure beispielsweise gemeinsam mit dem Sekundärgas wirksam reduzieren.

Im ersten sauer betriebenen Wäscher wird bei pH-Werten kleiner 1 Salzsäure durch Absorption in Wasser selektiv abgeschieden, ohne dass zu einer Abscheidung von Schwefeldioxid kommt. Folglich weist dieser Wäscher neben einer Zuleitung für Wasser 17 eine erste Leitung zur Ableitung von Salzsäure 8 hin zum Reaktor 12 sowie eine Leitung zum zweiten Wäscher 5 auf.

Der zweite neutral betriebene Wäscher dient dagegen der selektiven Abscheidung von Schwefeldioxid aus dem Abgas. Er weist neben einer Zuleitung für in Wasser gelöstes Natrium- oder Kalziumhydroxid 9 als Neutralisationsmittel eine zweite Leitung zur Ableitung einer wässrigen Lösung von Natriumsulfat oder Natriumsulfit bzw. Kalziumsulfat und Kalziumsulfit 10 zum Reaktor 12 sowie eine Ableitung für das abgereinigte Abgas 11 auf.

Die genannten Sulfite bilden sich durch Reaktion von Schwefeldioxid mit den jeweiligen Hydroxiden gemäß

2NaOH + SO₂ → Na₂SO₃ + H₂O (1)

bzw.

Ca(OH)₂ + SO₂ → CaSO₃ + H₂O (2),

wobei die Sulfite bei pH-Werten unterhalb von 7 teilweise mit dem Sauerstoff des Abgases zu Sulfaten weiter oxidieren können:

Na₂SO₃ + 1/2O₂ → Na₂SO₄ (3)

bzw.

CaSO₃ + 1/2O₂ → CaSO₄ (4)

Während die genannte Sulfate chemisch stabil und damit für eine Schwefeldioxidgenerierung im Reaktor 12 nicht zur Verfügung stehen, können die genannten Sulfite im Reaktor 12 durch eine Reaktion mit dem aus dem ersten Wäscher 4 eingeleiteten Salzsäuren unter Bildung von Chloriden und Wasser zu Schwefeldioxid reagieren:

Na₂SO₃ + 2HCl → 2NaCl + SO₂(g) + H₂0 (5)

bzw.

CaSO₃ + 2HCl → CaCl₂ + SO₂(g) + H₂0 (6).

Die Chloride sind wie die genannten Sulfate für den weiteren Abreinigungsprozess nicht mehr erforderlich und werden über die Ableitung 13 aus dem Reaktor 12 geleitet.

Im zweiten Wäscher ist daher die Einstellung der Oxidationsrate und damit des pH-Wertes von entscheidender Bedeutung. Grundsätzlich strebt man eine selektive Abscheidung von Schwefelverbindungen mit hohem Sulfit und geringen Sulfatanteil an. Liegt der pH-Wert deutlich unter 7, findet bevorzugt eine Weiteroxidierung der Sulfite zu den unerwünschten Sulfaten statt [1]. Steigende pH-Werte über 7 führen dagegen zu einer unerwünschten Abscheidung von Kohlendioxid aus dem Abgas mit der Folge, dass Karbonate in der Waschlösung gebildet werden:

2NaOH + CO₂ → Na₂CO₃ + H₂O (7)

bzw.

Ca(OH)₂ + CO₂ → CaCO₃ + H₂O (8).

Dies führt wiederum zu einem erforderlichen Mehrverbrauch an Neutralisationsmittel. Ferner würde sich bei der Vermischung mit HCl im Reaktor als unerwünschte Folge die Ausbeute an SO₂ drastisch senken, da das zur SO₂ Generierung benötigte HCl durch die Konkurrenzreaktion

Na₂CO₃ + 2HCl → 2NaCl + CO₂(g) + H₂0 (9)

bzw.

CaCO₃ + 2HCl → CaCl₂ + CO₂(g) + H₂0 (10)

verbraucht würde.

Im Ausführungsbeispiel war im Reaktor eine Schwefeldioxid-Ausbeute bei pH-Werten zwischen 4 und 9 im zweiten Wäscher erzielbar, wobei eine maximale Ausbeute bei Einstellung eines pH-Wertes um 7 zu beobachten war.

Den Reaktor verlassen zwei bereits zuvor erwähnte Stoffströme. Über die Ableitung 13 werden die stabilen Verbindungen Natriumchlorid und Natriumsulfat bzw. Kalziumchlorid oder Kalziumsulfat, welche für das Verfahren im Rahmen der Erfindung nicht nutzbar sind für eine weitere Entsorgung, beispielsweise einer Deponierung, abgeleitet. Auf der anderen Seite wird das im Reaktor gemäß der Reaktionen (5) bzw. (6) gebildete Schwefeldioxid gemeinsam mit dem Trägergas, welches über die Zuleitung 14 in den Reaktor eingeleitet wird, über die Ableitung 15 zum Brennraum rezykliert. Hierbei bietet es sich an, die Leitung 15 mit der Sekundärgaszufuhr 16 zu vereinigen. Die Zusammenführung der Leitung 15 und der Sekundärgaszufuhr 16 kann dabei so gestaltet werden, dass durch einen der beiden Stoffströme in einer der beiden Leitungen in der jeweils anderen Leitung einen gewissen Über- oder Unterdruck erzeugt und damit einen Transport und/oder Vermischung unterstützt.

In einer praktischen Umsetzung werden die Absalzungen aus den beiden Wäschern 4 und 5 in einem kleinen Rührkessel als Reaktor 12 vereinigt und zu einer Lösung vermischt. Als nichtreaktives Trägergas diente Stickstoff, welches über die Zuleitung 14 in die Lösung dispergiert wird. Das bei der Reaktion gemäß den Gleichungen (5) und (6) freigesetzte gasförmige Schwefeldioxid wird zusammen mit dem Trägergasstrom im Reaktor abgetrennt und der Sekundärgaszufuhr 16 zugeführt. Die auf diese Weise erhöhte Konzentration von Schwefeldioxid im Abgas durchläuft ausgehend vom Brennraum 1 erneut alle Komponenten bis zum zweiten Wäscher 5, wo erneut eine selektive Abscheidung des Schwefeldioxids erfolgt.

Der genannte Kreisprozess führt zu einer schrittweisen Erhöhung der Schwefeldioxidkonzentration im Rohabgas genau in den vorgenannten Bereichen der Dioxinbildung. Unter idealen Bedingungen lässt sich das Verhältnis von Schwefeldioxid zu Salzsäure im Rohabgas bei Hausmüllverbrennungsanlagen ohne zusätzliches Hilfsstoffe ausgehend von 0,1 bis auf Werte um 0,6 anheben, wobei eine erhöhte Schwefeldioxidkonzentration eine Reduktion von Chlor (Cl₂), welches ursächlich bei der PCDD/F-Bildung beteiligt ist, bewirkt.

### Literatur:

[1] R. Kager: Betriebserfahrungen mit den Rauchgasentschwefelungsanlagen der VEW AG; Staub Reinhaltung der Luft 10 (1987), S.68-70
[2] K. Raghunathan, B. K. Gullett: Role of Sulfur in Reducing PCDD and PCDF Formation; Environ. Sci. Technol. 30 (1996) S.1827-1834
[3] DE 198 49 021 A1
[4] EP 0 435 848 A1
[5] EP 1 271 053 A1
[6] EP 0 547 295 A2

### Bezugszeichenliste:

- 1: Brennraum
- 2: Kesselwand
- 3: Staubabscheider
- 4: Erster, sauer betriebener Wäscher
- 5: Zweiter, neutral betriebener Wäscher
- 6: Primärgaszufuhr
- 7: Rohabgas
- 8: Erste Leitung zur Ableitung von Salzsäure
- 9: Zuleitung von Natrium- oder Kalziumhydroxid
- 10: Zweite Leitung zur Ableitung von Natriumsulfat oder Natriumsulfit bzw. Kalziumsulfat und Kalziumsulfit
- 11: Abgereinigtes Abgas
- 12: Reaktor
- 13: Ableitung von Natriumchlorid und Natriumsulfat bzw. Kalziumchlorid oder Kalziumsulfat
- 14: Zuleitung eines Trägergases
- 15: Ableitung von Trägergas und Schwefeldioxid
- 16: Sekundärgaszufuhr
- 17: Zuleitung von Wasser

## Patentansprüche

1. Verfahren zur Reduzierung von polyhalogenierten Verbindungen in Verbrennungsanlagen mit mindestens einem Brennraum (1), **dadurch gekennzeichnet, dass** Schwefeldioxid SO₂ aus dem Rauchgas in mindestens einem Wäscher (5) selektiv abgeschieden wird und in den Brennraum rezykliert wird.

2. Verfahren nach Anspruch 1, umfassend die folgenden Verfahrensschritte:
a) Abscheiden von Salzsäure in einem ersten sauer betriebenen Wäscher (4) unter Zugabe von Wasser sowie
b) Abscheiden von SO₂ in einem zweiten neutral betriebenen Wäscher (5) unter Zugabe von Wasser und Natriumhydroxid bzw. Kalziumhydroxid, wobei es zur Bildung von Natriumsulfat und Natriumsulfit oder Kalziumsulfat und Kalziumsulfit, gelöst in Wasser kommt,
c) Zusammenführen der Salzsäure, der Natriumsulfat- und Natriumsulfitlösung bzw. der Kalziumsulfat- und Kalziumsulfitlösung in einen Reaktor (12), wobei es zu einer chemischen Reaktion unter Bildung von Natriumchlorid und Natriumsulfat bzw. Kalziumchlorid und Kalziumsulfat sowie einer Freisetzung von gasförmigem Schwefeldioxid kommt,
d) Einleiten eines inerten Trägergases in den Reaktor sowie
e) Weiterleiten des mit Schwefeldioxid beladenen Trägergases aus dem Reaktor in den Brennraum (1) und Ableiten von Natriumchlorid und Natriumsulfat bzw. Kalziumchlorid und Kalziumsulfat aus dem Reaktor.

3. Verfahren nach Anspruch 2, **dadurch gekennzeichnet, dass** zwischen Reaktor (12) und Brennraum (1) Sekundärgas mit dem Trägergas und dem Schwefeldioxid zusammengeführt wird.

4. Vorrichtung zur Reduzierung von polyhalogenierten Verbindungen in Verbrennungsanlagen mit mindestens einen Brennraum (1), umfassend
a) einen ersten sauer betriebenen Wäscher (4) mit einer ersten Leitung zur Ableitung von Salzsäure (8), sowie
b) einen zweiten neutral betriebenen, dem ersten nachgeschalteten Wäscher (5) mit einer Zuleitung für Natrium- oder Kalziumhydroxid (9) und einer zweiten Leitung zur Ableitung von Natriumsulfit und Natriumsulfat bzw. Kalziumsulfit und Kalziumsulfat (10),
**dadurch gekennzeichnet, dass**
c) ein Reaktor (12) vorgesehen ist, in den die erste und zweite Leitung sowie eine Zuleitung für ein inertes Trägergas (14) einmünden sowie eine dritte Leitung zur Ableitung von Natriumchlorid und Natriumsulfat bzw. Kalziumchlorid und Kalziumsulfat (13) ausmündet sowie
d) eine Verbindungsleitung zwischen Reaktor (12) und Brennraum (1) zur Leitung des Trägergases und Schwefeldioxids vom Reaktor in den Brennraum.

5. Vorrichtung nach Anspruch 4, **dadurch gekennzeichnet, dass** die Verbindungsleitung eine Einleitstelle für Sekundärgas aufweist.

6. Vorrichtung nach Anspruch 5, **dadurch gekennzeichnet, dass** die Einleitstelle in Richtung des Brennraumes in die Verbindungsleitung einmündet.

7. Vorrichtung nach Anspruch 4, 5 oder 6, **dadurch gekennzeichnet, dass** die Verbindungsleitung in den Brennraum in einem Bereich der Abgasausbrandzone einmündet.

## Claims

1. Method for reducing polyhalogenated compounds in combustion systems with at least one combustion chamber (1), **characterised in that** sulphur dioxide SO₂ is selectively precipitated out of the smoke gas in at least one washer (5) and is recycled into the combustion chamber.

2. Method according to Claim 1, comprising the following method steps:
a) Precipitating hydrochloric acid in a first acidically operated washer (4) with the addition of water as well as
b) Precipitating SO₂ in a second neutrally operated washer (5) with the addition of water and sodium hydroxide or calcium hydroxide, wherein the formation of sodium sulphate and sodium sulphite or calcium sulphate and calcium sulphite, dissolved in water, occurs,
c) Bringing together the hydrochloric acid, the sodium sulphate and sodium sulphite solution or the calcium sulphate and calcium sulphite solution in a reactor (12), wherein a chemical reaction occurs with the formation of sodium chloride and sodium sulphate or calcium chloride and calcium sulphate as well as a release of gaseous sulphur dioxide,
d) Introducing an inert carrier gas into the reactor as well as
e) Transferring the carrier gas loaded with sulphur dioxide from the reactor into the combustion chamber (1) and diverting sodium chloride and sodium sulphate or calcium chloride and calcium sulphate out of the reactor.

3. Method according to Claim 2, **characterised in that** secondary gas is brought together with the carrier gas and the sulphur dioxide between reactor (12) and combustion chamber (1).

4. Device for reducing polyhalogenated compounds in combustion systems with at least one combustion chamber (1), comprising
a) a first acidically operated washer (4) with a first line for diverting hydrochloric acid (8), as well as
b) a second neutrally operated washer (5) arranged downstream of the first washer with a supply line for sodium or calcium hydroxide (9) and a second line for diverting sodium sulphite and sodium sulphate or calcium sulphite and calcium sulphate (10),
**characterised in that**
c) a reactor (12) is provided into which the first and second line as well as a supply line for an inert carrier gas (14) open as well as a third line for diverting sodium chloride and sodium sulphate or calcium chloride and calcium sulphate (13) opens as well as
d) a connecting line between reactor (12) and combustion chamber (1) for guiding the carrier gas and sulphur dioxide from the reactor into the combustion chamber.

5. Device according to Claim 4, **characterised in that**
the connecting line has an introduction point for secondary gas.

6. Device according to Claim 5, **characterised in that**
the introduction point opens into the connecting line in the direction of the combustion chamber.

7. Device according to Claim 4, 5 or 6, **characterised in that** the connecting line opens into the combustion chamber in a region of the exhaust gas burn-out zone.

## Revendications

1. Procédé pour réduire les composés polyhalogénés dans des installations d'incinération comportant au moins une chambre de combustion (1),
**caractérisé en ce qu'**
on extrait sélectivement du dioxyde de soufre SO₂ des gaz brûlés dans au moins un dispositif laveur (5), et on le recycle dans la chambre de combustion.

2. Procédé selon la revendication 1,
comportant les étapes suivantes :
a) Extraction d'acide chlorhydrique dans un premier appareil laveur (4) fonctionnant en milieu acide avec addition d'eau, et
b) Extraction de SO₂ dans un second dispositif laveur (5) fonctionnant en milieu neutre avec addition d'eau et d'hydroxyde de sodium ou d'hydroxyde de potassium de façon à former du sulfate de sodium et du sulfite de sodium ou du sulfate de potassium et du sulfite de potassium dissouts dans l'eau,
c) Transfert conjoint de l'acide chlorhydrique, et de la solution de sulfate et de sulfite de sodium ou de la solution de sulfate et de sulfite de potassium dans un réacteur (12) de façon à produire une réaction chimique entrainant la formation de chlorure et de sulfate de sodium ou de sulfate et de chlorure de potassium à libérer du dioxyde de soufre gazeux,
d) Introduction d'un gaz porteur inerte dans le réacteur, et
e) Transfert ultérieur du gaz porteur chargé en dioxyde de soufre du réacteur vers la chambre de combustion (1), et évacuation de chlorure et de sulfate de sodium ou de chlorure et du sulfate de potassium du réacteur.

3. Procédé selon la revendication 2,
**caractérisé en ce qu'**
entre le réacteur (12) et la chambre de combustion (1), on transfère du gaz secondaire avec le gaz support et le dioxyde de soufre.

4. Dispositif pour réduire les composés polyhalogénés dans des installations d'incinération comportant au moins une chambre de combustion (1), comportant :
a) un premier appareil laveur (4) fonctionnant en milieu acide et équipé d'une première conduite d'évacuation d'acide chlorhydrique (8), et
b) un second dispositif laveur (5) fonctionnant en milieu neutre monté en aval du premier appareil laveur et équipé d'une conduite d'introduction d'hydroxyde de sodium ou d'hydroxyde de potassium (9), ainsi que d'une seconde conduite d'évacuation de sulfite et de sulfate de sodium ou de sulfate et de sulfite de potassium (10),
**caractérisé en ce qu'**
c) il est prévu un réacteur (12) dans lequel débouchent la première et la seconde conduite ainsi qu'une conduite d'introduction d'un gaz porteur (14), et d'où soit une troisième conduite pour l'évacuation de sulfate et de chlorure de sodium ou de sulfate et de chlorure de potassium (13), et
d) une conduite de liaison entre le réacteur (12) et la chambre de combustion (1) pour le transfert du gaz porteur et de dioxyde de soufre du réacteur dans la chambre de combustion.

5. Dispositif selon la revendication 4,
**caractérisé en ce que**
la conduite de liaison comporte un point d'introduction de gaz secondaire.

6. Dispositif selon la revendication 5,
**caractérisé en ce que**
le point d'introduction de gaz secondaire débouche dans la conduite de liaison en direction de la chambre de combustion.

7. Dispositif selon la revendication 4, 5 ou 6,
**caractérisé en ce que**
la conduite de liaison débouche dans la chambre de combustion dans une partie de la zone d'incinération des gaz.
